# EUROPEAN PATENT SPECIFICATION

(11) **EP 1 597 314 B1**
(45) Date of publication and mention of the grant of the patent: **26.11.2008**
(21) Application number: 04713541.3
(22) Date of filing: 23.02.2004
(51) Int. Cl.: C08L 23/10, C09D 123/10

(54) **POLYPROPYLENE COMPOSITIONS**
POLYPROPYLENMISCHUNG
COMPOSITIONS DE POLYPROPYLENE

(30) Priority: 24.02.2003 EP 03075528
(43) Date of publication of application: 23.11.2005
(73) Proprietor: Borealis Technology Oy, 06101 Porvoo (FI)
(72) Inventor: LAIHO, Erkki, FIN-06450 Porvoo (FI); PRAHL, Pekka, FIN-07500 Askola (FI); SAINIO, Markku, FIN-06100 Porvoo (FI); SALMIRINNE, Mikko, FIN-04130 Sipoo (FI)
(74) Representative: Campbell, Neil Boyd
(86) International application number: PCT/EP2004/001745
(87) International publication number: WO 2004/074370

(56) References cited:
- WO-A-00/71615
- DE-A- 4 229 153
- US-A- 4 493 923
- US-A- 4 508 872

## Description

### Field of invention

The present invention relates to polypropylene compositions with improved processability. Said compositions are especially suitable for extrusion coating processes, particularly when high line speeds are used. More particularly, the invention relates to blends of polypropylene (PP) comprising low-density polyethylene (LDPE) and high-density polyethylene (HDPE).

### State of the Art

Extrusion coating is a process wherein an extruder forces melted thermoplastic polymer through a horizontal slot die onto a moving web of a substrate material, which may comprise paper, board, film or aluminium foil. From the extruder the polymer melt, generally at a temperature from 270 to 330°C, is lead via an adapter and a pipe to a die where a thin molten film is formed. Typically the size of die lip opening is from 0.5 to 1.0 mm for extrusion coating dies and the desired coating thickness may be less than 10 µm. Line speeds in extrusion coating processes may generally vary in the range from 300 to 700 m/min. Typically the laminator runs at a speed of at least 30 times faster than the speed that the plastic is travelling in the die lip or air gap.

The plastic is then drawn down to a desired thickness. As the draw down takes place, a curtain of plastic exciting the die often necks-in i.e. it is pulled narrower in width. The draw down speed is the maximum speed, which can be reached before the molten polymer film breaks. Due to internal stress in polymers, the effective coating width is always narrower than the actual die slot width. This difference is called neck-in (= width of the die slot minus width of the coating) and it is measured in mm.

The neck-in phenomenon may cause bunch-up at the edges resulting in edge beads, which prohibits the machine from winding a good roll of the coating product and the roll will wind along the thick edge and be lose and uncontrolled in the centre, and also draw resonance may appear. Draw resonance describes the thickness variation of the polymer web in the machine direction, as well as in the transverse direction caused by inhomogeneous instable drawing of the melt.

Low-density polyethylene (LDPE) is mainly used in extrusion coating because of the ease in processing, although stiffness, barrier properties and temperature resistance of LDPE are often not satisfactory. Some high-density polyethylene (HDPE) is also used.

Polypropylene, also known as propylene polymer, is a well-known commercial polymer, which is used for a variety of products, such as packaging films and moulded shapes. It is produced for example by polymerisation of propylene over transitional metal coordination catalysts.

Commercial propylene polymers exhibit several desirable properties, such as good heat tolerance and transparency, which make polypropylene polymers interesting in many application fields.

Polypropylene is very difficult or almost impossible to run in an extrusion coating process because of the neck-in phenomenon and draw resonance. Further, the adhesion of polypropylene on substrates is not satisfactory, typically pinholes appear in the product and line speeds are very low.

Attempts have been made to manufacture blends of polypropylene with low-density polyethylene for extrusion coating applications. A blend of LDPE with a melting point of 110°C and polypropylene with a melting point of 160°C has been proposed but the processing of the blend was unsatisfactory. When a blend of polypropylene and LDPE is used in an extrusion process, the plastic leaving the die lip as a curtain of a height of approximately from 20 to 30 cm typically becomes too stiff, and it cannot be stretched/pulled sufficiently. As a result, only low line speeds can be used, additionally the neck-in problem appears and an uneven coating is obtained. Further, the product is uneconomic to produce.

Also blends of HMS (high melt strength) Daploy modified polypropylene have been proposed but the manufacturing process of HMS is complicated and very expensive.

US 4,508,872 discloses compositions with improved low temperature impact resistance for injection moulded or extruded articles, such as automobile trim parts, battery containers, tote boxes, crates, bottles etc. Said compositions comprise impact-improved, sequentially polymerized propylene-ethylene copolymers, LLDPE and HDPE. Said polymers are all manufactured using Ziegler-Natta type coordination catalysts, which yield narrow molecular weight distribution in the obtained polymers. The impact-modified propylene copolymer is preferably peroxide-contacted (visbroken) and the visbroken propylene copolymer is melt blended with HDPE and LLDPE. Articles manufactured from said blends possess good impact resistance even at lower temperatures.

US 5,773,123 discloses an air infiltration barrier laminate, which comprises a perforated laminate made from a woven polyolefin fabric, a resin and a polyolefin film. The resin is extrusion coated onto the woven polyolefin fabric and the resin may be low-density polyethylene, polypropylene and the like. The resin is discarded from the die to form a falling sheet of molten resin. The resin is extruded at such rate so as to form a layer of molten resin, said layer having a thickness from about 0.1 to 400 mil.

US 5, 457,016 relates to photographic support material comprising a carrier material coated with a synthetic resin on the front and backsides. Curling of the photographic support material is avoided and flatness and rigidity is assured by coating the front side of the carrier by a polyolefin adapted to receive the light sensitive layer and the back side by a blend of LDPE or LLDPE, 2 -75 wt % of polypropylene homopolymer or copolymer, preferably with narrow molecular weight distribution and 0 - 20 wt % of at least one other polyolefin. Preferably the carrier is subjected to a surface activation treatment in order to improve the adhesion of the layers. The coating was performed using low line speeds of 150 m/min in the extruder.

Based on the above it can be seen that there exists a need for a polypropylene composition, which can be used in extrusion coating at high line speeds and which yields a homogenous and even coating of high quality and without any excess neck-in or draw resonance problems.

### Object of invention

An object of the invention is to provide polypropylene compositions, which are particularly suitable for extrusion coating processes.

A further object of the invention is a method for the manufacture of a polypropylene composition for extrusion coating processes.

A still further object of the invention is the use of the polypropylene composition in extrusion coating processes.

Characteristic features of the polypropylene composition, of the method for the manufacture of a polypropylene composition for extrusion coating processes and of the use of the polypropylene composition are provided in the claims.

### Summary of the invention

The present invention relates to polypropylene compositions having good flow characteristics and processability in extrusion coating even at high line speeds and which polypropylene compositions yield extrusion coating products of high quality. Particularly, the present invention deals with compositions comprising polypropylene, high-pressure low-density polyethylene and high-density polyethylene.

### Detailed description of the invention

It has now been discovered that the problems and deficiencies relating to the compositions and blends according to the state of the art can be avoided or at least significantly decreased with a composition according to the present invention. It has been noted that certain combinations of polypropylene, LDPE and HDPE meet the objectives. Polypropylene yields the products rigidness and thermal resistance. LDPE yields the products processability, stability and runnability without neck-in problems in extrusion coating, particularly at high line speeds. HDPE, which has optimal shear thinning and elongation viscosity properties, yields the products improved flowability and excellent draw down values, it allows stretching and pulling and further improves the compounding of LDPE and PP homogenously with each other. The addition of HDPE improves the coating uniformity and gives an even profile. It also enables to use in the process high line speeds before melt film breaking occurs and the edge weaving is negligible also at higher line speeds. Further, HDPE adds good temperature resistance to the final coating.

High-density polyethylene (HDPE) is here considered to be polyethylene having a density more than 940 kg/m³.

High-pressure low-density polyethylene (LDPE) is here considered to be polyethylene having a density less than 940 kg/m³.

Visbreaking is here understood as modifying the molecular weight distribution of polypropylene by heat treatment in the presence of preferably small amounts of an organic peroxide, typically in an extruder. Visbreaking is well known in the art and it is described for example in US 3,887,534, the content of which is incorporated here by reference.

The composition according to the invention comprises:
from 50 to 90 wt%, preferably from 60 to 80 wt% of polypropylene selected from propylene homopolymer, random copolymer and blockcopolymer, which polypropylene may be unmodified or modified by visbreaking, with a melt flow rate (MFR) from 10 to 60 g/10min, preferably from 20 to 40 g/10min (230°C, 2.16 kg) and with a Mw/Mn of 5 - 8;
From 5 to 25 wt%, preferably from 10 to 20 wt% of high-pressure low-density polyethylene (LDPE), which is manufactured using high-pressure reactor technique, with a MFR from 3 to 18 g/10min, preferably from 4.5 to 8.5 g/10min (190°C, 2.16 kg) and with a density preferably from 915 to 925 kg/m³, particularly preferably from 918 to 923 kg/m³ and with a Mw/Mn of 20 - 28; and
From 5 to 40 wt%, preferably from 5 to 25 wt% and particularly preferably from 7.5 to 15 wt% of high-density polyethylene (HDPE), which may be unimodal and/or bimodal and/or multimodal, with a MFR from 5 to 15 g/10min, preferably from 7 to 12 g/10min (190°C, 2.16 kg) of and with a density preferably from 941 to 968 kg/m³, particularly preferably from 955 to 962 kg/m³.

Modality of a polymer refers to the form of its molecular weight distribution (MWD) curve, i.e. the appearance of the graph of the polymer weight fraction as a function of its molecular weight. If the polymer is produced in a sequential step process, i.e. utilizing reactors coupled in series and using different conditions in each reactor, the different polymer fractions produced in different reactors will each have their own molecular weight distribution, which may considerably differ from each other. The molecular weight distribution curve of the resulting final polymer can be looked at a superimposing of the molecular weight distribution curves of the polymer fractions, which will accordingly show two or more distinct maxima or at least be distinctly broadened compared with the curves for individual fractions. A polymer showing such a molecular weight distribution curve is called "bimodal" or "multimodal", respectively. If the molecular weight distribution is the same from each step, the molecular weight distribution curve is called "unimodal".

The HDPE may be unimodal and/or bimodal and/or multimodal.

### Bimodal HDPE

The bimodal HDPE is manufactured using any combination of gas-phase reactor techniques, preferably by loop-gas phase reactor technique as is described for example in patent EP 517868, the content of which is incorporated here by reference. The HDPE may contain minor amounts of stabilization compounds and it may also comprise a comonomer, such as 1-butene or 1-octene or 1-hexene or 4-methyl pentene.

The bimodal HDPE comprises from 40 to 60 wt% of a low molecular weight component and from 60 to 40 wt% of a high molecular weight component. The low molecular weight component has a weight average molecular weight of from about 10 000 to 50 000, a MFR from about 50 to 1000 g/10 min, preferably from 100 to 800 g/10 min, and a density from about 950 to 980 kg/m³, preferably from 955 to 965 kg/m³. Particularly preferably the low molecular weight component is a homopolymer. The high molecular weight component has a weight average molecular weight from about 150 000 to 400 000 and a density from about 920 to 950 kg/m³, preferably from 925 to 940 kg/m³.

### Unimonal HDPE

The unimodal HDPE is produced using any known process for manufacturing HDPE. As an example a gas phase reactor process can be mentioned. Polyethylene powder is produced continuously in a fluidized bed. A gas mixture of ethylene, butene and hydrogen circulates in the reactor system, keeping the bed fluidized. Fresh gases are continuously fed into the reactor system, together with a Ziegler-Natta catalyst and TEAL (Tri Ethyl Alumina, co-catalyst). The product leaves the reactor, goes through degassing systems and is transferred to silo or directly to compounding line.

The unimodal HDPE has typically MFR from about 2 to 20, preferably from 5 to 18, and particularly preferably from 8 to 16. The weight average molecular weight (Mw) is preferably from about 50.000 to 100.000, particularly preferably from 60.000 to 80.000. The Mw/Mn is preferably from 4 to 8, particularly preferably from 5 to 7.

### Multimodal HDPE

When an arrangement of more than two polymerisation reactor is series, well known in the art, are used and different reactor conditions in a series of reactors are applied, bimodal, trimodal etc. polymer product may be manufactured.

### Polypropylene

The polypropylene may be produced with any method known in the art. One or more reactors used in the manufacturing process may be selected from solution polymerisation reactors, slurry/liquid phase polymerisation reactors and gas phase polymerisation reactors, in any order. Copolymerisation may be performed in one or more reactors and C₂ - C₁₀ alkenens may be used as comonomers, preferably ethylene.

The optional modification of the molecular weight distribution of polypropylene by visbreaking, in order to increase the MFR of the polymer, can be made at any stage of the compounding/blending.

### LDPE

Preferably the LDPE is manufactured using high-pressure autoclave reactor technique utilizing free-radical polymerization. The obtained high-pressure LDPE has a high degree of long chain branching and a broad molecular weight distribution (MWD), typically 20 - 28. Preferably LDPE contains no additives.

In the process for the manufacture of the composition according to the invention suitably all components are blended together. The blending can be carried out by dry blending polymer pellets and charging the obtained blend to an extruder feeder, or by melt blending polymer pellets in an extruder, whereby the pellets containing all the polymer components are fed to the coating extruder.

An alternative method is to compound two of the first components together to form a master-batch and then the third component can be added to the final blend as a separate operation.

Suitably the extrusion coating/lamination is carried out by extruding the composition on a substrate using a coating/lamination extruder with a long screw, preferably with l/d ≥ 30 and applying high temperatures of 250 - 330°C, preferably 270 - 320°C in the extrusion coating/lamination process.

The composition according to the present invention enables the maintaining of the desired properties of polypropylene, particularly of the homopolymer, in the coating after the extrusion, such as temperature resistance, grease resistance barrier properties, surface hardness, transparency and rigidness. If desired, the heat sealability properties of the product may be improved by using propylene copolymers, particularly random copolymers. Further advantages of the compositions according to the invention are described in the following.

The combination of polypropylene, LDPE manufactured using high-pressure technique and HDPE results in the desired product, which meets the objectives. The processability of the composition is very good. The desirable properties of polypropylene are maintained even at higher polypropylene concentrations. The composition has improved compounding properties due to the favourable properties of HDPE. HDPE may easily be extruded by any extrusion coating or extrusion lamination method. According to one preferable embodiment of the invention, bimodal HDPE is very suitable for the composition.

High line speeds, such as 400-700 m/min, preferably 600-700 m/min can be maintained even at lower coating/lamination temperatures of 250 - 280°C. This results in better yields, higher outputs of the process and less need for energy.

The obtained coating is homogenous and even, it has good water vapour and grease barrier properties and no pinholes appear in the coating. Also a coating of thinner thickness can be manufactured, which results in lower coating weights, such as 10 - 20 g/m², of the products. Further, the product has good printability properties. The coating is stiffer and harder and it has a higher VICAT-softening temperature value, which results in that the amount of easier melting compounds is smaller and the coating has improved thermal resistance.

The extruded coating layer may also be a coextruded multi-layer structure in which the polymer layer according to the invention is coextruded with e.g. propylene homopolymer in order to support the problematic polypropylene coating. This can be carried out without any adhesive polymer layer in between. The polymer composition according to the invention may also be coextruded with LDPE. Further, the polymer composition according to the invention may also be used in extrusion lamination in which the polymer is extruded in between two substrate webs.

A coating according to the invention suits well for substrates like papers, cardboards, non-wovens, plastic-films such as BOPP (bi-oriented polypropylene film), wovens, metal foils, woven polyolefin fabrics and the like. It can also be used in connection with food products, as construction materials and as any kinds of packaging materials.

The composition according to the invention is illustrated in more detail with the embodiments presented in the following examples, however, to which the scope of the invention is not limited.

### Examples

The bimodal high-density polyethylene HDPE used in the examples was produced in a loop-gas phase reactor process, which is disclosed for example in WO 0071615. The contents of WO 0071615 are incorporated here by reference.

Typically HDPE is prepared using multistage polymerisation with a single catalyst system or a plurality of catalyst systems and the molecular weight distribution (MWD) of bimodal and multimodal HDPE varies between 5 and 100.

The bimodal HDPE used in the examples was manufactured as follows:
Into a 50 dm³ pre-polymerisation loop reactor, operated at 80°C and under 65 bar, was introduced 1 kg/hour ethylene, 22 kg/hour propane, 2 g/hour hydrogen and the polymerisation catalyst of EP 0 688 794 was used in a quantity such that PE (polyethylene) production rate was 6.8 kg PE/hour. The catalyst was a Ziegler-Natta catalyst supported on a silica carrier and containing Mg, Ti and Al the essential component. The MFR and density were estimated 30 g/10 min and 970 kg/m³ respectively in pre-polymerisation. The slurry was continuously removed from the loop reactor and it was introduced into a second loop reactor having a volume of 500 dm³, operating at 95°C and under 60 bar. Additional ethylene, propane and hydrogen were added so as to produce polyethylene at 27 kg/hour having a MFR of 500 g/10 min and a density of 974 kg/m³. The polymer (still containing the active catalyst) was separated from the reaction medium and transferred to a gas phase reactor operating at 85°C and under 20 bar, where additional hydrogen, ethylene and 1-butene comonomer were added so as to produce polyethylene at 70 kg/hour having a MFR of 9 g/10 min and a density of 960 kg m³. The fraction of high MFR (low molecular weight Mw) material in the total polymer was thus 40 %. The MWD of the HDPE used in the following examples was 14.

### Example 1

Polypropylene composition containing propylene homopolymer, high-pressure LDPE and bimodal HDPE

A blend was prepared by melt blending using an extruder Berstorff ZE 40. The melt temperature was 240°C. The blend composition was as follows:
70 wt % of propylene homopolymer, MFR 35g/10min (230°C, 2.16 kg)
15 wt% of high pressure LDPE, MFR 4.5g/10min (190°C, 2.16 kg),density 923 kg/m³
15 wt % of bimodal HDPE, MFR 9g/10min (190°C, 2.16 kg), density 960 kg/m³ The blend was run on a Beloit coating line, with a melt temperature of 300°C. Standard coating test runs to determine maximum coating speed (DD= drawdown), neck-in, draw resonance (Edge waving) and coating profile were evaluated. The substrate was UG Kraft 70 g/m² paper and paper width 80 cm.

The addition of bimodal HDPE improved the coating uniformity and gave an even profile. Also it was possible to use much higher line speed before melt film breaking occurred. The edge weaving was negligible also with higher speed.

### Comparative Example 1

### Polypropylene composition containing LDPE, no HDPE

A commercial extrusion coating grade polypropylene composition containing 30 wt% of LDPE and having a MFR of 23 g/10min (230°C, 2.16 kg) and a density of 910 kg/m³, was run as comparison. Edge weaving and uneven coating profile were observed and also the coating speed was very limited. Results of Example 1 and Comparative Example 1 are presented in following Table 1.

**Table 1.**

| **Property** | **Comparative Example 1** | **Example 1** |
|---|---|---|
| MFR (230C°, 2.16 kg) (g/10min) | 23 | 20 |
| Density (kg/m³) | 910 | 912 |
| Maximum coating speed (m/min) | 80-100* | 700 |
| Edge weaving (20g/m², 100 m/min) (mm) | 10 | 3 |
| Profile uniformity (10g/m²) (g/m²) | ± 1.1 | ±04 |
| Neck-in (mm) | 80 | 114 |

| | | |
|---|---|---|
| * Due to edge weaving variations in different runs | | |

### Example 2

Polypropylene composition containing propylene homopolymer, high-pressure LDPE and bimodal HDPE

A compound was prepared by melt blending in a full scale compounding line. Standard additives as known in the art to stabilize polypropylene were used in the blend. The compound composition was:
80 wt % of propylene homopolymer, MFR 35 g/10min (230°C, 2.16 kg)
10 wt % of high-pressure LDPE, MFR 4.5 g/10min (190°C, 2.16 kg), density 923 kg/m³
10 wt % of bimodal HDPE, MFR 9 g/10min(190°C, 2.16 kg), density 960 kg/m³

The blend was run on a Beloit coating line with a melt temperature of 300°C, and all characteristic coating tests were carried out.

As a result, when part of the LDPE of comparative example 1 was replaced with bimodal HDPE, the motor load (as Amperes) and extruder counter pressure were unexpectedly at lower level compared to commercial extrusion coating PP (polypropylene) grade. This is due to lubrication effect of low MW part in bimodal HDPE. Thus the coating speed can be increased, and the profile becomes more even.

### Comparative Example 2

Commercial extrusion coating polypropylene composition containing LDPE

A commercial extrusion coating polypropylene composition containing 20 wt% of LDPE and having a MFR of 20 g/10min and a density of 910 kg/m³, was run as the comparative example 2. The coating was performed as in Example 2. The results were similar to Comparative Example 1.

Test results of Example 2 and Comparative Example 2 are presented in following Table 2.

**Table 2.**

| **Property** | **Comparative Example 2** | **Example 2** |
|---|---|---|
| MFR (230C°, 2.16 kg) (g/10min) | 20 | 22 |
| Density (kg/m³) | 910 | 910 |
| Maximum coating speed (m/min) | 140 | 400 |
| Edge weaving (20g/m², 100 m/min) (mm) | 8 | 2 |
| Profile uniformity (10g/m²) (g/m²) | ± 1.2 | ± 0.8 |
| Motor load / extruder Amperes (20g/m²,100m/min) | 248 | 244 |
| Extruder counter pressure (bar) | 145 | 142 |
| Neck-in (mm) | 122 | 130 |

### Examples 3 and 4

Polypropylene compositions containing propylene homopolymer, high-pressure LDPE and bimodal HDPE

In order to optimise the blending ratio, two further blends, described as examples 3 and 4, were made. The compound composition of example 3 was:
72.5 wt % of propylene homopolymer, MFR 35 g/10min (230C°, 2.16 kg)
20 wt% of high-pressure HDPE, MFR 4.5 g/10min(190°C, 2.16 kg), density 923 kg/m³
7.5 wt % of bimodal HDPE, MFR 9 g/10min (190°C, 2.16 kg), density 960 kg/m³ The compound composition of example 4 was:
   60 wt % of propylene homopolymer, MFR 35 g/10min (230C°, 2.16 kg)
   25 wt % of high-pressure LDPE, MFR 4.5 g/10min(190°C,2.16 kg),density 923 kg/m³
   15 wt % of bimodal HDPE, MFR 9 g/10min (190°C, 2.16 kg), density 960 kg/m³

The blends were run on full-scale coating line ER-WE-PA, 6" and melt temperature was 305°C. Unexpectedly coating conditions, which are normal for commercial coating grades of high pressure LDPE, were achieved and still the coating process and the coating result was good. The line speed was 300 m/min, coating weight 23g/m². The profile variation was only ± 1.2 g/m². A comparative run was made with commercial polypropylene for extrusion coating containing 20 wt% of LDPE showing clear edge weaving and uneven profile.

The processability of the product of example 3 was a slightly better than that of example 4.

### Example 5

Polypropylene compositions containing propylene homopolymer, high-pressure LDPE and unimodal HDPE

The unimodal HDPE used in this example was manufactured in a gas phase reactor operating at a bed temperature of about 102 °C. The total pressure in the reactor was 21 bar, out of which the partial pressure for ethylene was about 9-10 bar, the partial pressure for butene was about 0.1 bar and partial pressure for hydrogen 3.5-4 bar. The rest was nitrogen. The catalyst used was a standard Ziegler-Natta catalyst known in the art, with a co-catalyst. The base resin produced using the above conditions had a MFR of 12, Mw of 70.000, Mw/Mn of 6 and Tc of 118°C, measured using the following conditions: Starting point; PP = 225°C, PE =180°C, Cooling; 10°C/ min.

A blend was prepared by dry blending the components.

The compound composition was the following:
70 wt % of propylene homopolymer, MFR 35 g/10min (230C°, 2.16 kg)
20 wt% of high-pressure LDPE, MFR 4.5 g/10min(190°C, 2.16 kg), density 923 kg/m³
10 wt % of unimodal HDPE, MFR 12 g/10min (190°C, 2.16 kg), density 964 kg/m³

Generally polypropylene/polyethylene dry blends are difficult to process in extrusion coating, however the addition of HDPE increased the process stability significantly. This can be seen from table 3 wherein the test results of the compositions from example 5 and comparative example 3 are shown.

### Comparative Example 3

Polypropylene composition containing propylene homopolymer and high-pressure LDPE

A blend was prepared by dry blending the components.

The compound composition was the following:
70 wt % of propylene homopolymer, MFR 35 g/10min (230C°, 2.16 kg)
30 wt% of high-pressure LDPE, MFR 4.5 g/10min(190°C, 2.16 kg), density 923 kg/m³

The test results of the compositions from example 5 and comparative example 3 are shown in the following table 3.

**Table 3.**

| **Property** | **Comparative Example 3** | **Example 5** |
|---|---|---|
| Maximum coating speed (m/min) | 200 | 300 |
| Edge weaving (20g/m²,100 m/min) (mm) | 4 | 0 |
| Profile uniformity (10g/m²)(g/m²) | ± 1.3 | ± 0.7 |

### Methods and definitions used

**Melt Flow Rate, MFR** was measured according to ISO 1133. Polypropylene was measured at 230°C, 2.16 kg load. Polyethylene was measured at 190°C, 2.16 kg load.

**Density** was determined according to method ISO 1183-187 as kg/m³.

**Molecular weight distribution MWD** is the relation between the numbers of molecules in a polymer and their individual chain length. **MWD** was calculated as the ratio of the weight average molecular weight to the number average molecular weight **Mw/Mn.** Molecular weights Mw and Mn were measured with GPC, gel permeation chromatograph or size-exclusion chromatography SEC. The GPC conditions used were for all polymers as follows:
Solvent: Trichloro benzene
Oven temperature: 140 C
Separation column: Styragel (Waters) 3x25cm

**Draw down** DD (10g/m²) was determined by keeping the coating weight constant (10 g/m²) during the testing period. The starting line speed was (100 m/min, 10g/m²) and it was increased with the acceleration of 100 m/min at 25 seconds until the point when molten film broke. This was recorded as draw down speed (m/min), which is also known as **Maximum Coating Speed.**

**Profile uniformity** was measured as across the transverse direction of the coated product. Five 100 cm² round samples were taken with constant intervals. The coated layer was separated from the substrate (by liquid) and polymer layer was weighted. The results were presented as an average coating weight (g/m²) and profile uniformity by average variances (± g/m²) across the transverse direction.

**Neck-in** was measured as the difference (in mm) between the width of the die and the width of the ready polymer coating.

**Edge-weaving** was measured as the difference between the maximum and minimum width of the coating (in mm). In many cases, especially with difficult polymers such as polypropylene the web starts to fluctuate before total breaking. This is normally recorded as edge weaving (mm).

**Draw resonance** was measured as the standard deviation of the coating weight on the substrate.

## Claims

1. Polypropylene composition, **characterized in that** it comprises from 50 to 90 wt% of polypropylene, from 5 to 25 wt% of high- pressure low-density polyethylene having a density of less than 940 kg/m³ and from 5 to 40 wt% of high-density polyethylene having a density of more than 940 kg/m³ wherein the high-density polyethylene is bimodal and/or multimodal.

2. The polypropylene composition according to claim 1, **characterized in that** the polypropylene is selected from propylene homopolymer, random copolymer and blockcopolymer.

3. The polypropylene composition according to claim 1 or claim 2, **characterized in that** the polypropylene has a MFR from 10 to 60 g/10min (230°C, 2.16 kg), the low-density polyethylene has a MFR from 3 to 18 g/10min (190°C, 2.16kg) and a density from 915 to 925 kg/m³, and the high-density polyethylene has a MFR from 5 to 15 g/10n (190°C, 2.16kg) and a density from 941 to 968 kg/m³.

4. The polypropylene composition according to any one of claims 1-3 **characterized in that** it comprises from 60 to 80 wt% of polypropylene, from 10 to 20 wt% of low-density polyethylene and from 5 to 25 wt% of high-density polyethylene.

5. The polypropylene composition according to any one of claims 1-4 **characterized in that** the polypropylene has a MFR from 20 to 40 g/ 10min (230°C, 2.16 kg), the low-density polyethylene has a MFR from 4.5 to 8.5 g/10min (190°C, 2.6kg) and a density from 918 to 923 kg/m³, and the high-density polyethylene has a MFR from 7 to 12 g/10min (190°C, 2.16kg) and a density from 955 to 962 kg/m³_{.}

6. The polypropylene composition according to any one of claims 1-5, **characterized in that** the low-density polyethylene is manufactured using high- pressure autoclave technique.

7. The polypropylene composition according to any one of claims 1-6, **characterized in that** the polypropylene is modified by visbreaking.

8. The polypropylene composition according to any one of claims 1-7, **characterized in that** the high-density polyethylene is bimodal high-density polyethylene, which is manufactured using loop-gas phase technique.

9. A method for the manufacture of a polypropylene composition, **characterized in that** from 50 to 90 wt% of polypropylene, from 5 to 25 wt% of high-pressure low-density polyethylene having a density of less than 940 kg/m³ and from 5 to 40 wt% of high-density polyethylene having a density of more than 940 kg/m³ wherein the high-density polyethylene is bimodal and/or multimodal are blended by dry blending the polymer pellets and charging the obtained blend to an extruder feeder, or by melt blending the polymer pellets in an extruder, whereby the pellets containing all the polymer components are fed to the extruder, or two of the first components are compounded together to form a master-batch and then the third component is added to the final blend as a separate operation.

10. The method according to claim 9 for the manufacture of a polypropylene composition, **characterized in that** the polypropylene is selected from propylene homopolymer, random copolymer and blockcopolymer.

11. The method according to claim 9 or claim 10 for the manufacture of a polypropylene composition, **characterized in that** the polypropylene has a MFR from 10 to 60 g/10min (230°C, 2.16keg), the low-density polyethylene has a MFR from 3 to 18 g/10min (190°C, 2.16kg) and a density from 915 to 925 kg/m³, and the high-density polyethylene has a MFR from 5 to 15 g/10min (190°C, 2.16kg) and a density from 941 to 968 kg/m³.

12. The method according to any one of claims 9-11 for the manufacture of a polypropylene composition, **characterized in that** from 60 to 80 wt% of polypropylene, from 10 to 20 wt% of low-density polyethylene and from 5 to 25 wt% of high-density polyethylene are used.

13. The method according to any one of claims 9-12 for the manufacture of a polypropylene composition, **characterized in that** the polypropylene has a MFR from 20 to 40 g/10min (230°C, 2.16kg), the low-density polyethylene has a MFR from 4.5 to 8.5 g/10min (190°C, 2.16kg) and a density from 918 to 923 kg/m³, and the high-density polyethylene has a MFR from 7 to 12 g/10min (190°C, 2.16kg) and a density from 955 to 962 kg/m³.

14. The method according to any one of claims 9-13 for the manufacture of a polypropylene composition, **characterized in that** the low-density polyethylene is manufactured using high-pressure autoclave technique.

15. The method according to any one of claims 9-14 for the manufacture of a polypropylene composition, **characterized in that** the high-density polyethylene is bimodal high-density polyethylene, which is manufactured using loop-gas phase technique.

16. The method according to any one of claims 9-15 for the manufacture of a polypropylene composition, **characterized in that** the polypropylene is modified by visbreaking at any stage of the compounding.

17. A method for extrusion coating/lamination, **characterized in that** the polypropylene composition according to any one of claims 1-8 or manufactured according to any one claims 9-16 is extruded or coextruded on substrate using a coating/lamination extruder with a long screw, preferably with l/d ≥ 30 and applying temperatures of 250 - 330°C, preferably 270 - 320°C in the extrusion process.

18. The method according to claim 17 for extrusion coating/lamination, **characterized in that** the substrate is selected from papers, cardboards, non-wovens, plastic-films, wovens, metal foils and woven polyolefin fabrics.

19. Use of a polypropylene composition according to any one of claims 1-8, or manufactured according to any one claims 9-16, in extrusion coating and in extrusion lamination.

20. Use according to claim 19, **characterized in that** line speeds of 400-700 m/min are used.

## Patentansprüche

1. Polypropylenzusammensetzung, **dadurch gekennzeichnet, daß** sie 50 bis 90 Gew.-% Polypropylen, 5 bis 25 Gew.-% Hochdruckpolyethylen niedriger Dichte, das eine Dichte von weniger als 940 kg/m³ aufweist, und 5 bis 40 Gew.-% Polyethylen hoher Dichte, das eine Dichte von mehr als 940 kg/m³ aufweist, umfaßt, wobei das Polyethylen hoher Dichte bimodal und/oder multimodal ist.

2. Polypropylenzusammensetzung nach Anspruch 1, **dadurch gekennzeichnet, daß** das Polypropylen aus einem Homopolymer, statistischen Copolymer und Blockcoplymer von Propylen ausgewählt ist.

3. Polypropylenzusammensetzung nach Anspruch 1 oder Anspruch 2, **dadurch gekennzeichnet, daß** das Polypropylen einen MFR-Wert von 10 bis 60 g/10 min (230°C, 2,16 kg) aufweist, das Polyethylen niedriger Dichte einen MFR-Wert von 3 bis 18 g/10 min (190°C, 2,16 kg) und eine Dichte von 915 bis 925 kg/m³ hat und das Polyethylen hoher Dichte einen MFR-Wert von 5 bis 15 g/10 n (190°C, 2,16 kg) und eine Dichte von 941 bis 968 kg/m³ aufweist.

4. Polypropylenzusammensetzung nach einem der Ansprüche 1 bis 3, **dadurch gekennzeichnet, daß** sie 60 bis 80 Gew.-% Polypropylen, 10 bis 20 Gew.-% Polyethylen niedriger Dichte und 5 bis 25 Gew.-% Polyethylen hoher Dichte umfaßt.

5. Polypropylenzusammensetzung nach einem der Ansprüche 1 bis 4, **dadurch gekennzeichnet, daß** das Polypropylen einen MFR-Wert von 20 bis 40 g/10 min (230°C, 2,16 kg) aufweist, das Polyethylen niedriger Dichte einen MFR-Wert von 4,5 bis 8,5 g/10 min (190°C, 2,16 kg) und eine Dichte von 918 bis 923 kg/m³ hat und das Polyethylen hoher Dichte einen MFR-Wert von 7 bis 12 g/10 min (190°C, 2,16 kg) und eine Dichte von 955 bis 962 kg/m³ aufweist.

6. Polypropylenzusammensetzung nach einem der Ansprüche 1 bis 5, **dadurch gekennzeichnet, daß** das Polyethylen niedriger Dichte unter Anwendung eines Hochdruck-Autoklavenverfahrens hergestellt wird.

7. Polypropylenzusammensetzung nach einem der Ansprüche 1 bis 6, **dadurch gekennzeichnet, daß** das Polypropylen durch Visbreaken modifiziert wird.

8. Polypropylenzusammensetzung nach einem der Ansprüche 1 bis 7, **dadurch gekennzeichnet, daß** das Polyethylen hoher Dichte ein bimodales Polyethylen hoher Dichte ist, das unter Anwendung eines Gasphasenverfahrens im geschlossenen Kreis hergestellt wird.

9. Verfahren zur Herstellung einer Polypropylenzusammensetzung, **dadurch gekennzeichnet, daß** 50 bis 90 Gew.-% Polypropylen, 5 bis 25 Gew.-% Hochdruckpolyethylen niedriger Dichte, das eine Dichte von weniger als 940 kg/m³ aufweist, und 5 bis 40 Gew.-% Polyethylen hoher Dichte, das eine Dichte von mehr als 940 kg/m³ aufweist, wobei das Polyethylen hoher Dichte bimodal und/oder multimodal ist, durch Trockenmischen des Polymergranulats und Einfüllen des erhaltenen Gemischs in eine Beschickungseinrichtung eines Extruders oder durch Mischen des Polymergranulats in der Schmelze in einem Extruder gemischt werden, wobei das Granulat, das all diese Polymerkomponenten enthält, dem Extruder zugeführt wird oder zwei der ersten Komponenten miteinander vermengt werden, so daß eine Stammmischung entsteht, und die dritte Komponente dem abschließenden Gemisch dann als ein separater Vorgang zugegeben wird.

10. Verfahren nach Anspruch 9 zur Herstellung einer Polypropylenzusammensetzung, **dadurch gekennzeichnet, daß** das Polypropylen aus einem Homopolymer, statistischen Copolymer und Blockcoplymer von Propylen ausgewählt ist.

11. Verfahren Anspruch 9 oder Anspruch 10 nach zur Herstellung einer Polypropylenzusammensetzung, **dadurch gekennzeichnet, daß** das Polypropylen einen MFR-Wert von 10 bis 60 g/10 min (230°C, 2,16 kg) aufweist, das Polyethylen niedriger Dichte einen MFR-Wert von 3 bis 18 g/10 min (190°C, 2,16 kg) und eine Dichte von 915 bis 925 kg/m³ hat und das Polyethylen hoher Dichte einen MFR-Wert von 5 bis 15 g/10 min (190°C, 2,16 kg) und eine Dichte von 941 bis 968 kg/m³ aufweist.

12. Verfahren nach einem der Ansprüche 9 bis 11 zur Herstellung einer Polypropylenzusammensetzung, **dadurch gekennzeichnet, daß** 60 bis 80 Gew.-% Polypropylen, 10 bis 20 Gew.-% Polyethylen niedriger Dichte und 5 bis 25 Gew.-% Polyethylen hoher Dichte verwendet werden.

13. Verfahren nach einem der Ansprüche 9 bis 12 zur Herstellung einer Polypropylenzusammensetzung, **dadurch gekennzeichnet, daß** das Polypropylen einen MFR-Wert von 20 bis 40 g/10 min (230°C, 2,16 kg) aufweist, das Polyethylen niedriger Dichte einen MFR-Wert von 4,5 bis 8,5 g/10 min (190°C, 2,16 kg) und eine Dichte von 918 bis 923 kg/m³ hat und das Polyethylen hoher Dichte einen MFR-Wert von 7 bis 12 g/10 min (190°C, 2,16 kg) und eine Dichte von 955 bis 962 kg/m³ aufweist.

14. Verfahren nach einem der Ansprüche 9 bis 13 zur Herstellung einer Polypropylenzusammensetzung, **dadurch gekennzeichnet, daß** das Polyethylen niedriger Dichte unter Anwendung eines Hochdruck-Autoklavenverfahrens hergestellt wird.

15. Verfahren nach einem der Ansprüche 9 bis 14 zur Herstellung einer Polypropylenzusammensetzung, **dadurch gekennzeichnet, daß** das Polyethylen hoher Dichte ein bimodales Polyethylen hoher Dichte ist, das unter Anwendung eines Gasphasenverfahrens im geschlossenen Kreis hergestellt wird.

16. Verfahren nach einem der Ansprüche 9 bis 15 zur Herstellung einer Polypropylenzusammensetzung, **dadurch gekennzeichnet, daß** das Polypropylen in irgendeiner Stufe des Vermengens durch Visbreaken modifiziert wird.

17. Verfahren zum Extrusionsbeschichten/-laminieren, **dadurch gekennzeichnet, daß** die Polypropylenzusammensetzung nach einem der Ansprüche 1 bis 8 oder die nach einem Verfahren nach einem der Ansprüche 9 bis 16 hergestellte Polypropylenzusammensetzung auf ein Substrat extrudiert oder coextrudiert wird, wobei ein Extruder zum Beschichten/Laminieren mit einer langen Schnecke, vorzugsweise mit 1/d ≥30, verwendet wird und beim Extrusionsprozeß Temperaturen von 250 bis 330°C, vorzugsweise von 270 bis 320°C, angewendet werden.

18. Verfahren nach Anspruch 17 zum Extrusionsbeschichten/-laminieren, **dadurch gekennzeichnet, daß** das Substrat aus Papieren, Pappen, Vlies, Kunststoffolien, Geweben, Metallfolien und Polyolefingeweben ausgewählt ist.

19. Verwendung einer Polypropylenzusammensetzung nach einem der Ansprüche 1 bis 8 oder einer nach einem Verfahren nach einem der Ansprüche 9 bis 16 hergestellten Polypropylenzusammensetzung beim Extrusionsbeschichten und beim Extrusionslaminieren.

20. Verwendung nach Anspruch 19, **dadurch gekennzeichnet, daß** Geschwindigkeiten der Anlage von 400 bis 700 m/min angewendet werden.

## Revendications

1. Composition de polypropylène, **caractérisée en ce qu'**elle comprend de 50 à 90 % en poids de polypropylène, de 5 à 25 % en poids de polyéthylène basse densité haute pression ayant une densité inférieure à 940 kg/m³ et de 5 à 40 % en poids de polyéthylène haute densité ayant une densité supérieure à 940 kg/m³, dans laquelle le polyéthylène haute densité est bimodal ou multimodal.

2. Composition de polypropylène selon la revendication 1, **caractérisée en ce que** le polypropylène est choisi parmi un homopolymère, un copolymère aléatoire et un copolymère bloc de propylène.

3. Composition de polypropylène selon la revendication 1 ou 2, **caractérisée en ce que** le polypropylène a un indice de fluage allant de 10 à 60 g/10 min (230 °C, 2,16 kg), le polyéthylène basse densité a un indice de fluage allant de 3 à 18 g/10 min (190 °C, 2,16 kg) et une densité allant de 915 à 925 kg/m³, et le polyéthylène haute densité a un indice de fluage allant de 5 à 15 g/10 min (190 °C, 2,16 kg) et une densité allant de 941 à 968 kg/m³.

4. Composition de polypropylène selon l'une quelconque des revendications 1 à 3, **caractérisée en ce qu'**elle comprend de 60 à 80 % en poids de polypropylène, de 10 à 20 % en poids de polyéthylène basse densité et de 5 à 25 % en poids de polyéthylène haute densité.

5. Composition de polypropylène selon l'une quelconque des revendications 1 à 4, **caractérisée en ce que** le polypropylène a un indice de fluage allant de 20 à 40 g/10 min (230 °C, 2,16 kg), le polyéthylène basse densité a un indice de fluage allant de 4,5 à 8,5 g/10 min (190 °C, 2,16 kg) et une densité allant de 918 à 923 kg/m³, et le polyéthylène haute densité a un indice de fluage allant de 7 à 12 g/10 min (190 °C, 2,16 kg) et une densité allant de 955 à 962 kg/m³.

6. Composition de polypropylène selon l'une quelconque des revendications 1 à 5, **caractérisée en ce que** le polyéthylène basse densité est fabriqué en utilisant la technique de l'autoclave haute pression.

7. Composition de polypropylène selon l'une quelconque des revendications 1 à 6, **caractérisée en ce que** le polypropylène est modifié par viscoréduction.

8. Composition de polypropylène selon l'une quelconque des revendications 1 à 7, **caractérisée en ce que** le polyéthylène haute densité est un polyéthylène haute densité bimodal, qui est fabriqué en utilisant la technique de la phase gazeuse en boucle.

9. Procédé de fabrication d'une composition de polypropylène, **caractérisé en ce que** de 50 à 90 % en poids de polypropylène, de 5 à 25 % en poids de polyéthylène basse densité haute pression ayant une densité inférieure à 940 kg/m³ et de 5 à 40 % en poids de polyéthylène haute densité ayant une densité supérieure à 940 kg/m³, le polyéthylène haute densité étant bimodal et/ou multimodal, sont mélangés en mélangeant à sec les pastilles de polymère et en chargeant le mélange ainsi obtenu dans un système d'alimentation d'extrudeuse, ou en mélangeant à l'état fondu les pastilles de polymère dans une extrudeuse, ou les pastilles contenant tous les constituants polymères sont alimentés à l'extrudeuse, ou deux des premiers constituants sont formulés ensemble pour former un mélange maître puis le troisième constituant est ajouté au mélange final en tant qu'opération séparée.

10. Procédé selon la revendication 9 pour la fabrication d'une composition de polypropylène, **caractérisé en ce que** le polypropylène est choisi parmi un homopolymère, un copolymère aléatoire et un copolymère bloc de propylène.

11. Procédé selon la revendication 9 ou la revendication 10 pour la fabrication d'une composition de polypropylène, **caractérisé en ce que** le polypropylène a un indice de fluage allant de 10 à 60 g/10 min (230°C, 2,16 kg), le polyéthylène basse densité a un indice de fluage allant de 3 à 18 g/10 min (190°C, 2,16 kg) et une densité allant de 915 à 925 kg/m³, et le polyéthylène haute densité a un indice de fluage allant de 5 à 15 g/10 min (190°C, 2,16 kg) et une densité allant de 941 à 968 kg/m³.

12. Procédé selon l'une quelconque des revendications 9 à 11, pour la fabrication d'une composition de polypropylène, **caractérisé en ce qu'**on utilise de 60 à 80 % en poids de polypropylène, de 10 à 20 % en poids de polyéthylène basse densité et de 5 à 25 % en poids de polyéthylène haute densité.

13. Procédé selon l'une quelconque des revendications 9 à 12, pour la fabrication d'une composition de polypropylène, **caractérisé en ce que** le polypropylène a un indice de fluage allant de 20 à 40 g/10 min (230 °C, 2,16 kg), le polyéthylène basse densité a un indice de fluage allant de 4,5 à 8,5 g/10 min (190°C, 2,16 kg) et une densité allant de 918 à 923 kg/m³, et le polyéthylène haute densité a un indice de fluage allant de 7 à 12 g/10 min (190°C, 2,16 kg) et une densité allant de 955 à 962 kg/m³.

14. Procédé selon l'une quelconque des revendications 9 à 13, pour la fabrication d'une composition de polypropylène, **caractérisé en ce que** le polyéthylène basse densité est fabriqué en utilisant la technique de l'autoclave haute pression.

15. Procédé selon l'une quelconque des revendications 9 à 14, pour la fabrication d'une composition de polypropylène, **caractérisé en ce que** le polyéthylène haute densité est un polyéthylène haute densité bimodal, qui est fabriqué en utilisant la technique de la phase gazeuse en boucle.

16. Procédé selon l'une quelconque des revendications 9 à 15, pour la fabrication d'une composition de polypropylène, **caractérisé en ce que** le polypropylène est modifié par viscoréduction à l'une des étapes de la formulation.

17. Procédé de revêtement/laminage par extrusion, **caractérisé en ce que** la composition de polypropylène selon l'une quelconque des revendications 1 à 8 ou fabriquée selon l'une quelconque des revendications 9 à 16 est extrudée ou co-extrudée sur un substrat en utilisant une extrudeuse de revêtement/laminage avec une longue vis, de préférence avec un rapport l/d ≥ 30 et en appliquant des températures allant de 250 à 330 °C, de préférence de 270 à 320°C dans le procédé d'extrusion.

18. Procédé selon la revendication 17, pour le revêtement/laminage par extrusion, **caractérisé en ce que** le substrat est choisi parmi les papiers, les cartons, les textiles non tissés, les films plastiques, les textiles tissés, les feuilles métalliques et les tissus de polyoléfine tissés.

19. Utilisation d'une composition de polypropylène selon l'une quelconque des revendications 1 à 8, ou fabriquée selon l'une quelconque des revendications 9 à 16, dans le revêtement par extrusion et le laminage par extrusion.

20. Utilisation selon la revendication 19, **caractérisée en ce qu'**on utilise des vitesses de ligne allant de 400 à 700 m/min.
